Europäisches Patentamt

European Patent Office

Office européen des brevets

(11) Publication number: **0 271 250**
**A1**

## EUROPEAN PATENT APPLICATION

(21) Application number: 87310362.6

(22) Date of filing: 24.11.87

(51) Int. Cl.⁴: **H05B 6/12** , H05B 6/34

The title of the invention has been amended (Guidelines for Examination in the EPO, A-III, 7.3).

(30) Priority: **25.11.86 GB 8628103**

(43) Date of publication of application:
**15.06.88 Bulletin 88/24**

(84) Designated Contracting States:
**BE DE ES FR GB IT NL**

(71) Applicant: **TI Creda Limited**
**Creda Works P.O. Box 5 Blythe Bridge**
**Stoke-on-Trent Staffordshire, ST11 9LJ(GB)**

(72) Inventor: **Coppin, Julian**
**106 Thoday Street**
**Cambridge CB1 3AX(GB)**

(74) Representative: **Pike, Harold John et al**
**Abel & Imray Northumberland House 303-306**
**High Holborn**
**London, WC1V 7LH(GB)**

(54) **Induction heating coil for induction cooking apparatus.**

(57) A pan heating coil of an induction heating circuit for a cooking appliance comprises a length of insulated conductor wound into flat pancake form. To reduce the emission from the coil of radiation at radio frequencies, part of the outermost turn or some of the outer turns of the coil are counterwound with respect to the remainder of the turns of the coil.

EP 0 271 250 A1

## Improvements in or relating to Induction Heating Coils for Cooking Appliances

This invention relates to induction heating coils for cooking appliances.

Such coils are used in induction heating circuits which include a rectifier for converting A.C. mains supply to direct current which is then converted by a converter to an alternating supply of a suitable frequency usually in the range of from 20-35 kHz. The supply energises the heating coil which induces currents in a suitable utensil placed over the coil thereby heating the utensil and its contents.

It is found, in such circuits, that the heating coil is also a radiator of radio frequency interference and it is an object of the present invention to provide an induction heating coil which emits a minimum of radiation at radio frequencies.

According to the present inveniton, an induction heating coil for an induction heating circuit for a cooking appliance comprises a length of insulated conductor wound into a flat coil, and in which at least a part of the outer turn of the coil is or some of the outermost turns of the coil are counterwound with respect to the remainder of the coil.

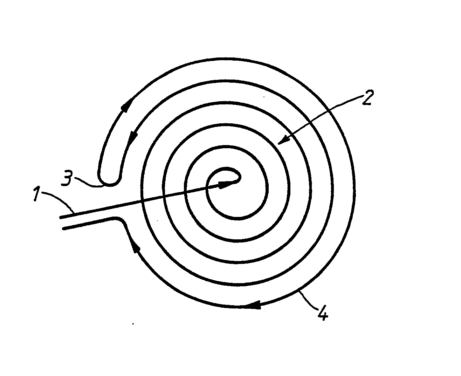

By way of example only, an embodiment of the invention wil now be described in greater detail with reference to the accompanying drawing which shows the embodiment in perspective diagrammatic form.

The coil, which can be used in the induction heating circuit described in co-pending Patent Application No. 86.28098 (Case 218) comprises an insulated conductor wound into a flat pancake like coil.

It is found that such radio frequency interference as is emitted by the coil emanates principally from the outer periphery thereof. To reduce the emission of such interference, part or all of the outer turn of the coil is counter-wound or wound back with respect to the next outermost turn of the coil.

The effect of the counterwound turn is to cancel, at least partially, the radiation field that emanates from the coil. If necessary, several of the outermost turns may be counterwound with respect to the remainder of the coil.

The drawing shows, in perspective diagrammatic form, a flat pancake coil whose turns are shown separated for the purpose of clarity. Insulated conductor 1 is wound into a flat coil 2 of spiral form, the outermost turn being doubled back at 3 to form an outer turn 4 counterwound with respect to the remainder of the coil 2.

It will be appreciated that more or less than one turn may be counterwound in dependence upon the extent to which cancellation of the emitted field takes place.

The cooking appliance may be a hob unit in which case one or more of the pan heating units may include a pan heating coil of the form described above. Other pan heating units may be gas burners and/or electric heating units.

The invention may also be embodied in a cooker which may be free-standing. One or more of the top or pan heating units may be induction heating units with pan coils as described above. Other top or pan heating units may be gas burners and/or electric heating units.

## Claims

1. An induction heating coil for an induction heating circuit for a cooking appliance comprising a length of insulated conductor wound into a flat coil, and in which at least a part of the outer turn of the coil is or some of the outermost turns of the coil are counterwound with respect to the remainder of the coil.

2. An induction heating coil for an induction heating system for a cooking appliance substantially as described.

European Patent
Office

**EUROPEAN SEARCH REPORT**

Application number

| DOCUMENTS CONSIDERED TO BE RELEVANT | | EP 87310362.6 |
|---|---|---|

| Category | Citation of document with indication, where appropriate, of relevant passages | Relevant to claim | CLASSIFICATION OF THE APPLICATION (Int. Cl.4) |
|---|---|---|---|
| A | DE - B - 1 032 861 (BROWN, BOVERI)<br>* Claim 1; fig. 1,2 *<br>-- | 1,2 | H 05 B 6/12<br>H 05 B 6/34 |
| A | DE - A1 - 2 643 449 (SIEMENS)<br>* Claim 1; fig. 3 *<br>-- | 1,2 | |
| A | US - A - 4 334 135 (SMITH)<br>* Column 4, line 23 - column 5, line 2; fig. 2 *<br>-- | 1,2 | |
| A | GB - A - 1 048 081 (HOOVER)<br>* Page 1, line 88 - page 2, line 24; fig. 1 *<br>---- | 1,2 | |

**TECHNICAL FIELDS SEARCHED (Int. Cl.4)**

H 05 B 6/00

The present search report has been drawn up for all claims

| Place of search | Date of completion of the search | Examiner |
|---|---|---|
| VIENNA | 25-02-1988 | TSILIDIS |